# EUROPÄISCHE PATENTSCHRIFT

(11) **EP 0 465 819 B1**
(45) Veröffentlichungstag und Bekanntmachung des Hinweises auf die Patenterteilung: **19.10.1994**
(21) Anmeldenummer: 91108930.8
(22) Anmeldetag: 31.05.1991
(51) Int. Cl.: A01D 78/10

(54) **Heuwerbungsmaschine**
Hay-making machine
Machine de fenaison

(30) Priorität: 04.07.1990 DE 9010176 U
(43) Veröffentlichungstag der Anmeldung: 15.01.1992
(73) Patentinhaber: H. Niemeyer Söhne GmbH & Co. KG, D-48466 Hörstel (DE)
(72) Erfinder: Ungruh, Josef, W-4440 Rheine (DE); Werthmöller, Ludger, W-4446 Hörstel-Riesenbeck (DE)

(56) Entgegenhaltungen:
- DE-A- 2 125 847
- DE-A- 2 419 749
- DE-C- 3 917 091
- DE-U- 9 000 691
- FR-A- 1 527 547

## Beschreibung

Die Erfindung betrifft eine Heuwerbungsmaschine, insbesondere Kreiselzettwender, gemäß dem Oberbegriff des Anspruchs 1.

Es sind Kreiselzettwender bekannt, bei denen der komplette Zinkenkreisel, im wesentlichen bestehend aus den Zinkenträgern, Lagerung, Antriebskegelrad und winkelverstellbares Stützrad, über einen Flansch an der starren Kreiselachse lösbar mit dem Getriebegehäuse verbunden ist, um eine schnelle und einfache Montage oder Demontage der einzelnen Zinkenkreisel zu gewährleisten. Bei derartigen Kreiselzettwendern ist die Winkelverstellung der Stützräder zur Fahrtrichtung unterhalb des Zinkenkreisels angeordnet, so daß diese einzeln im Winkel verstellt werden müssen, wenn der Kreiselzettwender zum Freirechen an Zäunen oder dergleichen verwendet wird.

Die DE-OS 21 25 847 die eine Maschine mit den Merkmalen des Oberbegriffes des Anspruchs 1 bescheibt, beschreibt eine Laufradsteuerung für einen Kreiselzettwender, bei dem die Laufräder über eine oberhalb der Antriebsachse liegende Verstelleinrichtung gemeinsam im Winkel verstellt werden können. Die Kreiselachsen kreuzen sich mit der Antriebsachse derart, daß eine einfache Montage bzw. Demontage der einzelnen Kreisel nicht möglich ist.

Aufgabe der Erfindung ist es, eine Heuwerbungsmaschine, insbesondere Kreiselzettwender zu schaffen, bei der die Einstellung der Stützräder und die Montage bzw. Demontage der einzelnen Zinkenkreisel einfach möglich ist.

Diese Aufgabe wird erfindungsgemäß durch die Merkmale im kennzeichnenden Teil des Anspruchs 1 gelöst. Bezüglich weiterer, vorteilhafter Ausgestaltungen der Erfindung wird auf die Ansprüche 2 bis 7 verwiesen.

Nach der Erfindung ist in vorteilhafter Weise auf der Kreiselachse nahe deren Kopfende, eine koaxiale Schwenkhülse begrenzt schwenkbar gelagert, die das Stützrad trägt und an deren oberen Ende ein Stellhebel angreift, der das Kreiselzinkenlager und das dem Kreiselzinken zugeordnete Getriebeteil übergreift und unterhalb des Kopfendes der Kreiselachse aus dem Maschinengehäuse herausgeführt ist. Die Kreiselachse ist am Maschinengehäuse lösbar befestigt, so daß in vorteilhafter Weise das Montieren bzw. Demontieren des einzelnen Zinkenkreisels möglich ist. Platz- und raumsparend ist die gemeinsame Winkelverstellung der Stützräder integriert, wobei vorzugsweise über einen Handhebel in Verbindung mit einer gefederten Sperrklinke verschiedene Winkelstellungen eingestellt werden können.

Die Schwenkhülse ist mittels eines Querbolzens auf der Kreiselachse axial festgelegt. Der Querbolzen durchgreift die Kreiselachse in einer, sich zu ihren Enden hin, erweiternden Queröffnung, so daß die Schwenkhülse begrenzt um die Hochachse verschwenkbar ist.

Nach der Erfindung ist in vorteilhafter Weise auf dem unteren Teil der Schwenkhülse ein Rohrträger für das Stützrad aufgesetzt, der mit der Schwenkhülse über den Querbolzen verbunden ist. Das obere Ende des Rohrträgers stützt sich auf dem Kreiselzinkenlager unterseitig ab.

Der Stellhebel für die Winkelverstellung der Stützräder ist so geführt, daß er das Kegelrad umgreift und in vorteilhafter Weise so abgekröpft, daß er im unteren Bereich, durch eine seitliche Wandaussparung aus dem Maschinengestell herausgeführt wird. Dadurch wird auf einfache Weise sichergestellt, daß das Getriebegehäuse ausreichend dimensioniert werden kann, die Dichtung des Getriebes gewährleistet und trotzdem die Verstellung benutzerfreundlich angeordnet ist.

Die gemeinsame, gleichförmige Verstellung der Stützräder der einzelnen Zinkenkreisel erfolgt über eine an ihren Außenenden mit dem Stellhebel gelenkig verbundenen Stellstange.

Die Erfindung ermöglicht auf besonders einfache und kostengünstige Weise die bedienungsfreundliche Winkelverstellung der Stützräder in Laufrichtung und die Montage bzw. Demontage der einzelnen Zinkenkreisel.

Weitere Vorteile der Erfindung ergeben sich aus der nachfolgenden Beschreibung und den Zeichnungen, in denen ein Ausführungsbeispiel nach der Erfindung schematisch, angenähert maßstäblich dargestellt ist.

Es zeigt:
- Fig. 1 -: Einen Kreiselzettwender in Arbeitsstellung, in einer Seitenansicht.
- Fig. 2 -: Eine Teilansicht eines Kreiselzettwenders in der Draufsicht.
- Fig. 3 -: Ein Schnitt A-A gemäß Fig. 2.
- Fig. 4 -: Ein Schnitt B-B gemäß Fig. 3.

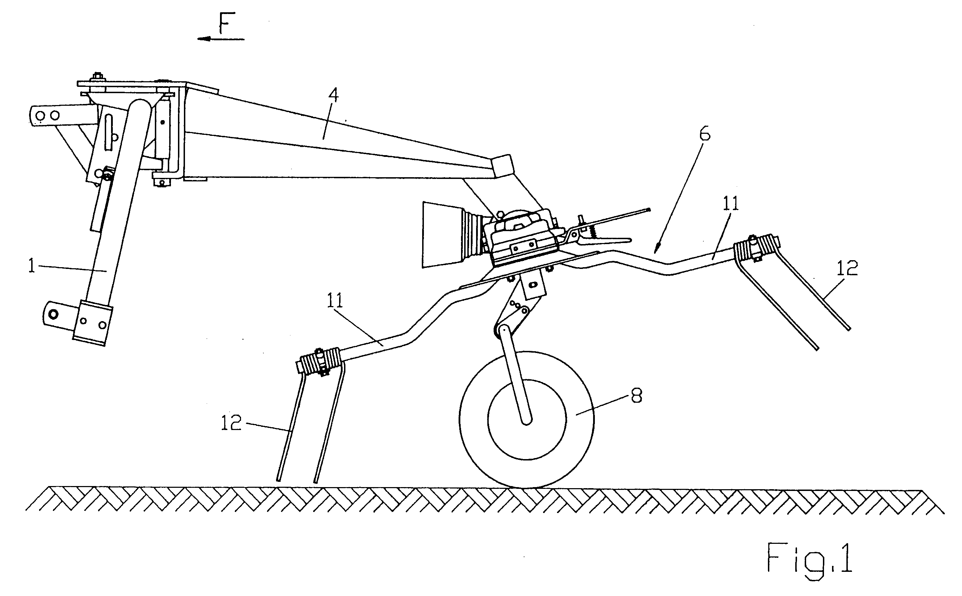

Der als Ausführungsbeispiel dargestellte Kreiselzettwender nach der Erfindung ist über einen Dreipunktbock (1) mit dem nicht dargestellten Dreipunktgestänge des ebenfalls nicht dargestellten Traktors verbunden und bewegt sich bei der Arbeit in Fahrtrichtung (F). Fig. 1 zeigt einen Kreiselzettwender in vereinfachter Darstellung in Arbeitsstellung. Es sind vereinfachend lediglich zwei Zinkenarme (11) mit Zinken (12) eines Zinkenkreisels (6) dargestellt.

Der Dreipunktbock (1) ist um eine vertikale Achse (2) pendelnd und um die horizontale Achse der Unterlenker (3) des Dreipunktgestänges schwenkbar, damit sich der Kreiselzettwender in Arbeitsstellung gegenüber dem Traktor frei bewegen kann. Ein Träger (4) verbindet den Dreipunktbock (1) mit einem Geräterahmen (5) an dessen Enden vorzugsweise je ein Maschinengehäuse (14) befestigt ist. Im Maschinengehäuse (14) ist jeweils ein Zinkenkreisel (6) gelagert. Bei der Ausrüstung des Gerätes mit mehreren Zinkenkreiseln (6) sind diese quer zur Fahrtrichtung über horizontale Schwenkachsen (7) gegeneinander gelenkig angeordnet. Sie stützen sich über die Stützräder (8), die jedem Zinkenkreisel (6) zugeordnet sind, ab und passen sich so den Bodenunebenheiten optimal an.

Der Antrieb des Kreiselzettwenders erfolgt über die Traktorzapfwelle und eine nicht dargestellte Gelenkwelle, die diese mit einem Verteilergetriebe (9) verbindet. über die Antriebswelle (10) werden die einzelnen Zinkenkreisel (6) jeweils über ein Winkelgetriebe im Maschinengehäuse (14) angetrieben. Koaxial zu der horizontalen Schwenkachse (7) sind in den Antriebswellen (10) Weitwinkelgelenke vorgesehen, die den Antrieb der einzelnen Zinkenkreisel (6) bei der Arbeit gewährleisten.

Die Zinkenkreisel (6) sind je nach Arbeitsbreite des Gerätes und dem Durchmesser des Zinkenkreisels (6) im Abstand zueinander gegenläufig drehend angeordnet.

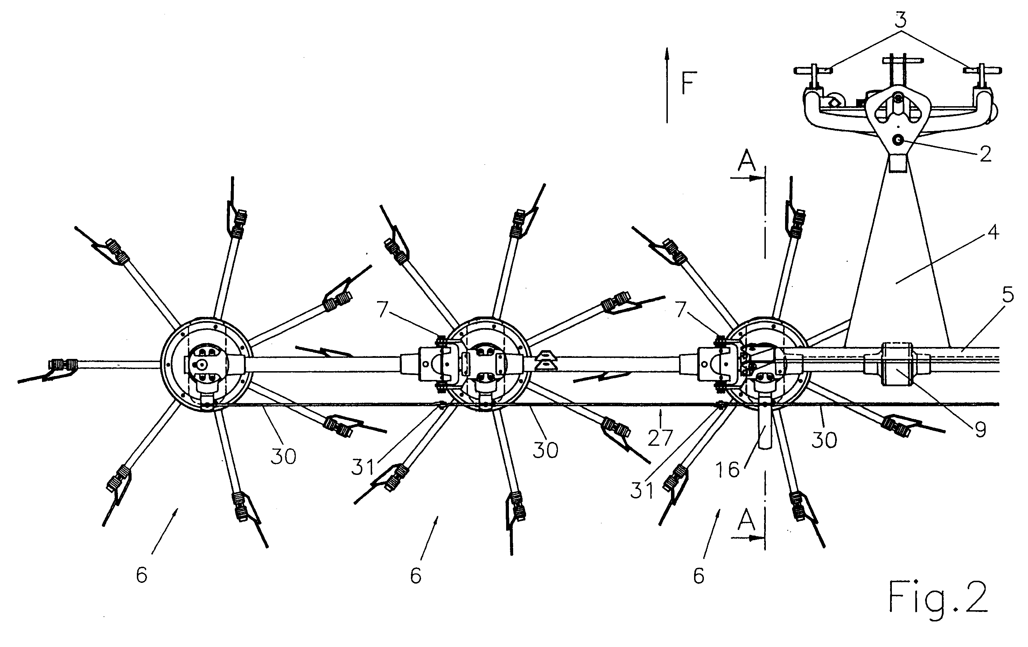

Fig. 2 zeigt beispielsweise eine Hälfte eines sechskreiseligen Kreiselzettwenders vereinfacht dargestellt in der Draufsicht.

Jedem Zinkenkreisel (6) ist mindestens ein Stützrad (8) zugeordnet. Es können jedoch auch beispielsweise zwei pendelnd angeordnete Stützräder pro Zinkenkreisel (6) vorgesehen werden. Dies ist dann vorteilhaft, wenn bei sehr unebenen Bodenverhältnissen und hoher Fahrgeschwindigkeit ein ruhigerer Lauf des Gerätes gewünscht wird.

Jedes Stützrad (8) ist höheneinstellbar, um damit die Stellung des Zinkens (12) zum Boden einstellen zu können. Nach der Erfindung sind die Stützräder (8) in vorteilhafter Weise auch zur Fahrtrichtung (F) winkelverstellbar, um Grenzbereiche an Zäunen, Hecken, Gräben oder dergleichen freirechen zu können.

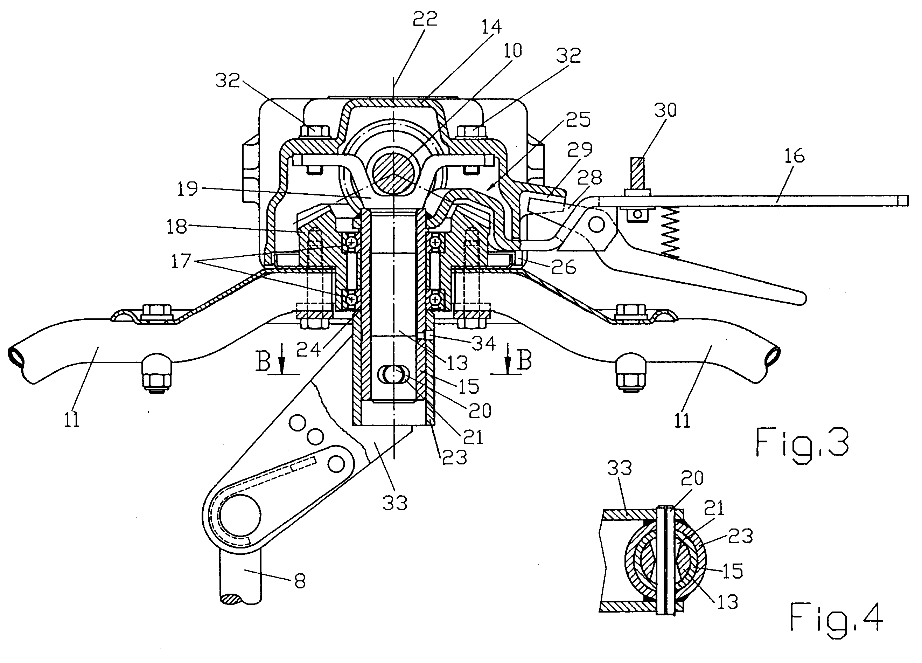

Fig. 3 zeigt einen Schnitt A-A durch einen Zinkenkreisel (6). Die Tragachse (13) ist über Schrauben (32) lösbar mit dem Maschinengehäuse (14) verbunden. Nach dem Lösen der Schrauben (32) kann bei Bedarf der komplette Zinkenkreisel (6) vom Maschinengehäuse (14) gelöst werden. Dies ist für die Montage und eventuelle Reparaturen vorteilhaft, da die Antriebswelle (10) nicht ausgebaut werden muß. Hierbei umfaßt das Kopfende (19) der Tragachse (13) die Antriebswelle (10).

Die Winkelverstellung des Stützrades jedes Zinkenkreisels (6) erfolgt über eine gemeinsame Stellstange (27), die aus einzelnen Stangengliedern (30) besteht, die im Stangengelenk (31) miteinander verbunden sind. Das Stangengelenk (31) ist koaxial zur horizontalen Schwenkachse (7) angeordnet. über einen Stellhebel (16) wird die Stellstange (27) betätigt. Eine gefederte Sperrklinke (28) greift in am Maschinengehäuse (14) befindliche Aussparungen (29) ein. Es sind mehrere Aussparungen (29) vorgesehen, um den den Verhältnissen entsprechenden Winkel optimal wählen zu können.

Für die gemeinsame Verstellung der Stützräder (8) ist vorzugsweise ein verlängerter Stellhebel (16) vorgesehen, und zwar im mittleren Bereich des Gerätes. Die übrigen Stellhebel (16) sind verkürzt ausgeführt.

Neben der gemeinsamen Verstellung von Hand ist es nach der Erfindung auch möglich, den Stellhebel (16) über einen Hydraulikzylinder mit dem Geräterahmen (5) oder dem Maschinengehäuse (14) zu verbinden. Diese Ausführung bietet den Vorteil, daß die Bedienung zur Winkelverstellung der Stützräder (8) vom Traktor aus erfolgen kann. In diesem Falle entfallen die gefederte Sperrklinke (28) und die Ausnehmungen (29).

Der Stellhebel (16) umfaßt durch eine Abkröpfung (25) das Getriebeteil (18) und tritt im Bereich der Wandaussparung (26) aus dem Maschinengehäuse (14) aus. Durch diese vorteilhafte Ausgestaltung der Erfindung wird die untere Abdichtung der Zinkenkreisellagerung nicht beeinträchtigt. Ferner ist eine einfache und gedrungene Bauweise durch diese Anordnung des Stellhebels (16) gewährleistet.

Der Stellhebel (16) ist mit der Schwenkhülse (15) fest verbunden. Die Schwenkhülse (15) ist auf der Tragachse (13) gelagert und trägt ihrerseits die Zinkenkreisellager (17). Koaxial zur Hochachse (22) des Zinkenkreisels (6) umfaßt der Rohrträger (23) die Schwenkhülse (15). Er stützt sich mit seinem Stirnende (24) am unteren Lager (17) ab und ist das Verbindungsglied zum Träger (33), der den Rohrträger (23) mit dem Stützrad (8) verbindet.

Der Querbolzen (20) verbindet kraftschlüssig den Rohrträger (23) und den damit fest verbundenen Träger (33) mit der Schwenkhülse (15). Er sichert auch den Rohrträger (23) und damit das Stützrad (8) in axialer Richtung.

Im Bereich des Querbolzens (20) ist in der Tragachse (13) eine jeweils zu ihrem Ende hin erweiternde Queröffnung (21) vorgesehen, deren Größe so bemessen ist, daß die vorgebene Winkelverstellung des Stützrades (8) nicht behindert wird. Bei der gemeinsamen Winkelverstellung der Stützräder (8) durch den Stellhebel (16) wird also die Schwenkhülse (15), der Rohrträger (23) und damit das Stützrad (8) gegenüber der starren Tragachse (13) verschwenkt. Eine Schmierbohrung (34), die sowohl den Rohrträger (23) als auch die Schwenkhülse (15) durchgreift, sichert die Schmierung der Tragachse (13).

In Fig. 4 stellt der Schnitt B-B, gemäß Fig. 3, die Verhältnisse im Bereich des Querbolzens (20) dar.

## Patentansprüche

1. Heuwerbungsmaschine mit mehreren, quer zur Fahrtrichtung (F) nebeneinander angeordneten, jeweils um eine Hochachse (22) drehbaren, an einem Maschinengestell abgestützen Zinkenkreiseln (6), die je über ein Getriebe von einer horizontalen, sämtlichen Zinkenkreiseln (6) gemeinsamen, im Maschinengestell gelagerten Antriebswelle (10) in Umlauf versetzbar sind und die sich jeweils über ein Stützrad (8) auf dem Boden abstützen, wobei das Stützrad (8) an einer Tragachse (13) abgestützt und dieser gegenüber zur Laufrichtungseinstellung begrenzt verschwenk- und feststellbar ist, die an ihrem Kopfende (19) mit einem Maschinengehäuse (14) lösbar verbunden ist und die Lager (17) für den Zinkenkreisel (6) trägt, dadurch gekennzeichnet, daß auf der Tragachse (13), nahe deren Kopfende (19), eine koaxiale Schwenkhülse (15) begrenzt schwenkbar gelagert ist, diese das Stützrad (8) trägt und an deren oberen Ende ein Stellhebel (16) angreift, der das obere Zinkenkreisellager (17) und das dem Zinkenkreisel (6) zugeordnete Getriebeteil (18) übergreift und unterhalb des Kopfendes (19) der Tragachse (13) aus dem Maschinengehäuse (14) herausgeführt ist.

2. Heuwerbungsmaschine nach Anspruch 1, dadurch gekennzeichnet, daß die Schwenkhülse (15) mittels eines Querbolzens (20) auf der Tragachse (13) axial festgelegt ist, der eine sich zu ihrem Ende hin erweiternde Queröffnung (21) in der Tragachse (13) durchgreift, in der der Querbolzen (20) begrenzt um die Hochachse (22) verschwenkbar ist.

3. Heuwerbungsmaschine nach Anspruch 2, dadurch gekennzeichnet, daß auf dem unteren Teil der Schwenkhülse (15) ein Rohrträger (23) für das Stützrad (8) aufgesetzt und mit der Schwenkhülse (15) über den Querbolzen (20) verbunden ist.

4. Heuwerbungsmaschine nach Anspruch 3, dadurch gekennzeichnet, daß das obere Stirnende (24) des Rohrträgers (23) das Zinkenkreisellager (17) unterseitig abstützt.

5. Heuwerbungsmaschine nach einem der Ansprüche 1 bis 4, dadurch gekennzeichnet, daß der Stellhebel (16) in seinem im unteren Getriebeteil (18) übergreifenden Bereich eine Abkröpfung (25) in der Form eines unten offenen U aufweist und durch eine seitliche Wandaussparung (26) im Maschinengehäuse (14) zu dessen Außenseite herausgeführt ist.

6. Heuwerbungsmaschine nach einem der Ansprüche 1 bis 5, dadurch gekennzeichnet, daß sämtliche Stellhebel (16) für eine gemeinsame und gleichförmige Verstellung an ihrem Außenende gelenkig mit einer Stellstange (27) verbunden sind, wobei ein als Betätigungshebel ausgebildeter Stellhebel (16) über eine federbelastete Sperrklinke (28) in unterschiedlichen Stellungen in Ausnehmungen (29) am Maschinengehäuse (14) festlegbar ist.

7. Heuwerbungsmaschine nach Anspruch 6, dadurch gekennzeichnet, daß die Stellstange (27) aus untereinander gelenkig verbundenen Stangengliedern (30) zusammengesetzt ist.

## Claims

1. Haymaking machine with several rotary tines (6), arranged next to one another at right angles to the direction of travel (F), each supported so that it can rotate about a vertical axis (22), on a machine frame, which can each be set turning via a gear by a horizontal drive shaft (10) with bearings in the machine frame common to all the rotary tines (6) and which is supported by a support wheel (8) is supported on a bearing axle (13) and this can be swung and locked within limits with respect to the running direction setting, which at its top end (19), is linked to the machine housing (14) in such a way that it can be detached and which carries bearings (17) for the rotary tines (6), characterised in that on the bearing axle (13), near their top end (19), a coaxially pivoting sleeve is supported on bearings so that it can be pivoted within limits, this supports the support wheel (8) and it its upper end engages an adjustment lever (16) which overlaps the upper rotary tine bearing (17) and the gear section (18) associated with the rotary tine (6) and leads out of the machine housing underneath the top end (19) of the bearing axle (13).

2. Haymaking machine in accordance with claim 1, characterised in that the pivoting sleeve (15) is fixed axially by means of a transverse bolt (20) to the bearing axle (13), which penetrates a transverse opening (21) in the bearing axle (13) widening at its end, in which the transverse bolt (20) can be pivoted within limits about the vertical axle (22).

3. Haymaking machine in accordance with claim 2, characterised in that a tubular girder (23) for the support wheel (8) is attached to the bottom section of the pivoting sleeve (15) and is connected with the pivoting sleeve (15) via the transverse bolt (20).

4. Haymaking machine in accordance with claim 3, charaterised in that the upper front end (24) of the tubular girder (23) supports the rotary tine bearing (17) underneath.

5. Haymaking machine in accordance with one of claims 1 to 4, characterised in that the control lever (16) in its area overlapping in the bottom gear section (18) has a gap (25) in the form of a U open at the bottom and leads to its outside through a lateral wall opening (26) in the machine housing (14).

6. Haymaking machine in accordance with one of claims 1 to 5, characterised in that all control levers (16) are connected for commom and uniform adjustment at their outer end are hinged to a control rod (27) whereby a control lever (16) formed as an actuation lever can be locked by a spring-loaded safety catch (28) in different positions in recesses (29) on the machine housing (14).

7. Haymaking machine in accordance with claim 6, characterised in that the control rod (17) is composed of rod members (30) joined by hinges.

## Revendications

1. Faneuse mécanique comprenant plusieurs tourniquets portegriffes (6) alignés côte à côte transversalement à la direction (F) de déplacement de la faneuse, ces tourniquets étant montés chacun autour d'un axe supérieur de rotation (22) porté par un châssis de la machine et pouvant être mis chacun en rotation par l'intermédiaire d'un engrenage entrainé par un arbre commun, horizontal (10), chaque tourniquet s'appuyant sur le sol par l'intermédiaire d'une roue de soutien (8) montée en appui le long d'un essieu porteur (13) autour duquel elle peut pivoter de manière limitée pour régler la direction de déplacement et être bloquée, l'essieu porteur (13) étant relié de manière amovible, par son extrémité supérieure (19) au boitier du mécanisme (14) et portant les roulements (17) sur lesquels est monté le tourniquet (6), caractérisée en ce qu'une douille (15) à oscillation limitée est montée sur l'essieu porteur (13), coaxialement à cet essieu et près de son extrémité supérieure (19), cette douille portant la roue de soutien (8) et étant en prise, à sa partie supérieure, avec un levier de réglage (16) qui passe au dessus du roulement supérieur (17) du tourniquet et du pignon d'entraînement (18) porté par ce tourniquet et sort du boitier du mécanisme (14), en dessous de l'extrémité supérieure (19) de l'essieu porteur (13).

2. Faneuse selon la revendication 1, caractérisée en ce que la douille oscillante (15) est fixée sur l'essieu porteur (13), en direction axiale, par une broche transversale (20) traversant une ouverture (21) pratiquée transversalement dans l'essieu porteur (13) et évasée vers chacune de ses extrémités, de sorte que la broche (20) peut pivoter dans cette ouverture, de manière limitée autour de l'axe supérieur (22).

3. Faneuse selon la revendication 2, caractérisée en ce qu'un support tubulaire (23) de la roue de soutien (8) est monté sur la partie inférieure de la douille oscillante (15) et relié à celle-ci par la broche transversale (20).

4. Faneuse selon la revendication 3, caractérisée en ce que le support tubulaire (23), par sa face frontale supérieurs (24), constitue l'appui inférieur du tourniquet porte-griffes.

5. Faneuse selon l'une des revendications 1 à 4, caractérisée en ce que le levier de réglage (16) dans sa partie chevauchant le pignon d'entraînement (18) est coudé selon un U ouvert vers le bas et sort à extérieur en traversant une ouverture (26) de la paroi du boitier (14) du mécanisme.

6. Faneuse selon l'une des revendications 1 à 5, caractérisée en ce que les divers leviers de réglage (16) sont articulés par leurs extrémités externes à une tige de réglage (27) permettant de leur donner à tous le même réglage, l'un des leviers (16) servant de levier de manoeuvre et pouvant être fixé, par l'intermédiaire d'un cliquet d'arrêt (28) à rappel élastique, dans des positions différentes définies par des évidements (29) du boîtier du mécanisme (14).

7. Faneuse selon la revendication 6, caractérisée en ce que la tige de réglage (27) est constituée d'une suite de tiges élémentaires (30) reliées de façon articulée entre elles.
